(19) **Europäisches Patentamt European Patent Office Office européen des brevets**

(11) **EP 4 187 210 B1**

(12) **EUROPEAN PATENT SPECIFICATION**

(45) Date of publication and mention of the grant of the patent:
**09.07.2025 Bulletin 2025/28**

(21) Application number: **21210281.8**

(22) Date of filing: **24.11.2021**

(51) International Patent Classification (IPC):
**G01F 1/84** *(2006.01)* **G01F 15/18** *(2006.01)*

(52) Cooperative Patent Classification (CPC):
**G01F 1/8409; G01F 1/845; G01F 1/8477; G01F 1/8486; G01F 1/8495; G01F 15/18**

(54) **CORIOLIS MEASURING TRANSMITTER AND CORIOLIS MEASURING DEVICE**

CORIOLIS-MESSWERTGEBER UND CORIOLIS-MESSVORRICHTUNG

ÉMETTEUR DE MESURE DE CORIOLIS ET DISPOSITIF DE MESURE DE CORIOLIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.05.2023 Bulletin 2023/22**

(73) Proprietor: **Endress+Hauser Flowtec AG**
**4153 Reinach (CH)**

(72) Inventors:
• **Schwenter, Benjamin**
**4226 Breitenbach (CH)**
• **Werner, Marc**
**79639 Grenzach-Wyhlen (DE)**
• **Schütz, Markus**
**4432 Lampenberg (CH)**
• **Kumar, Vivek**
**4123 Allschwil (CH)**
• **Alioli, Mattia**
**4102 Binningen (CH)**

(74) Representative: **Endress + Hauser Group Services (Deutschland) AG+Co. KG Colmarer Straße 6 79576 Weil am Rhein (DE)**

(56) References cited:
**EP-A1- 0 601 256      EP-A2- 2 048 480**
**WO-A1-2021/239351      WO-A1-2022/100836**
**WO-A1-2023/088722      DE-A1- 4 026 724**
**DE-T2- 69 938 581**

**Description**

The invention relates to a Coriolis measuring transmitter of a Coriolis measuring device arranged for measuring a property of a medium such as density or mass flow and to such a Coriolis measuring device. The Coriolis measuring device is connected to a pipe system such that said medium passes through a measuring tube of said Coriolis measuring transmitter.

Such transmitters are well known, they provide at least one measuring tube, drivers for oscillating the measuring tube and sensors for measuring said oscillations. In case of a multitude of measuring tubes such as a pair of measuring tubes, a flow splitter is arranged to guide the medium from the pipe to the multitude of measuring tubes, see for example the patent application DE102019120339A1.

EP 2 048 480 A2, EP 0 601 256 A1 and DE 699 38 581 T2 each disclose a Coriolis measuring transmitter with a pair of measuring tubes which are connected to a support element by tube fittings or by welding. The support element is a single massive body comprising fluid chambers forming flow splitters which are connectable with a pipeline using connecting elements. However, due to constructional matters flow splitter are designed with a level progress of the flow path. This leads to less compact Coriolis measuring transmitters and seriously limits flow path optimizations.

Object of the invention is to provide a robust and compact Coriolis measuring transmitter.

The problem is solved by a Coriolis measuring transmitter according to main claim 1 as well as a Coriolis-Measuring device according to main claim 11.

A Coriolis measuring transmitter of a Coriolis measuring device for measuring a mass flow or a density of a medium flowing through a pipe according to the invention comprises

at least one pair of measuring tubes arranged to oscillate against each other, wherein each measuring tube comprises a centrally arranged bend,

wherein in an equilibrium position the measuring tubes of a pair of measuring tubes are symmetrical with respect to a symmetry plane between both measuring tubes;

at least one driver to oscillate the measuring tubes and at least two sensors for measuring the oscillations of the measuring tubes;

two guiding devices arranged for guiding the medium from the pipe to the measuring tubes and vice versa,

wherein each guiding device comprises a fluid chamber with a first opening for connection with the pipe and with a second opening for each measuring tube for connection with the measuring tubes,

wherein the guiding devices are each formed from multiple parts, especially formed from two parts,

wherein a first part forms a pipe connecting part and

wherein at least one second part forms a measuring tube connecting part,

wherein in a projection of the fluid chamber onto said symmetry plane, the fluid chamber follows a chamber bend connecting a measuring tube volume with a pipe volume.

As the guiding devices comprise multiple parts, they allow for more complex design and non-even fluid chamber progress. In this way a flow optimization of the flow path may include more variables.

According to the invention the first part and the at least one second part are connected leak tightly by an interface respectively, whe in said interface comprises a protrusion and a recess at least partially complementary to said fluid chamber following said chamber bend in said projection.

This allows for simple and robust assembly of the guiding device.

According to the invention the connection of the interface is secured by one of the following methods: screwing, locking, clicking, gluing, welding, bonding.

In an embodiment said fluid chamber comprises a bifurcation with a first part and a second part,

wherein within said first part each cross section of the fluid chamber comprises a single coherent area with a single center of area,

wherein within said second part each cross section of said fluid chamber comprises two disconnected areas each corresponding to a measuring tube and each with a separate center of area,

wherein a center line defined by a projection of the center of areas onto said symmetry plane confines an angle $\Theta$ and define a radius $R_{CL}$,

wherein a shape of each cross-section is characterized by two circles each comprising a center as well as a same radius R, wherein a separation S of the centers of the circles perpendicular to said symmetry plane and the radii R depend on $\Theta$ and follow following formula:

$$R(\Theta) = R_P * F_R(\Theta)$$

with

- R as a radial length measured from a center of area
- $R_P$ as a scalar constant representing a pipe radius,
- $F_R$ as a monotonic non-increasing function with a maximum at $\Theta=0°$

and

S($\Theta$) as monotonic non-decreasing function with a minimum at $\Theta = 0°$.

The shape of the cross sections dependent on $\Theta$ has one coherent area or is split into two separate areas. In the case of a coherent area both circles have a positive overlap with a maximum overlap at $\Theta = 0$.

A deviation of a total area of a real cross section from a total area of a cross section as described with the circles is less than 5% and especially les than 2% of the total area of a cross section as described with the circles.

In an embodiment is $1.8 < R_{CL} / R_P < 2.4$, and especially $1.9 < R_{CL} / R_P < 2.3$, and preferably $2 < R_{CL} / R_P < 2.2$.

This relation leads to less pressure drop of a flowing medium.

In an embodiment is $16.5\,mm < R_{CL} < 20.5\,mm$, and especially $17.5\,mm < R_{CL} < 19.5\,mm$, and preferably $18\,mm < R_{CL} < 19\,mm$, and/or $8.5\,mm < R_P < 9\,mm$, and especially $8.6\,mm < R_P < 8.9\,mm$, and preferably $8.7\,mm < R_P < 8.8\,mm$.

In this way a compact setup is achieved still allowing for sufficient medium flow.

In an embodiment said bifurcation takes place at an angle $\Theta_B$ within an interval I of $\Theta$, wherein $45° < \Theta_B < 75°$, and especially $50° < \Theta_B < 70°$, and preferably $55° < \Theta_B < 65°$.

In this way the first bifurcation part and the second bifurcation part may have a well optimized flow path.

In an embodiment $F_R = - a * \Theta + 1$ with $0.0031 < a < 0.0051$, and especially $0.0036 < a < 0.0046$, and preferably $0.0039 < a < 0.0043$.

This proved to be a particularly advantageous parameter range.

In an embodiment $S(\Theta) / R_P = b * \Theta$ with $0.0109 < |b| < 0.0169$, and especially $0.0129 < |b| < 0.0149$, and preferably $0.0134 < |b| < 0.0144$.

This proved to be a particularly advantageous parameter range.

In an embodiment said length $R_{CL}$ defines an arc of a circle confining $\Theta$ with a radius of said length $R_{CL}$,

wherein within cross-section planes projections of the center of area onto said symmetry plane deviate from said arc of a circle towards the center of said angle,

wherein for $\Theta < \Theta_C$ for a deviation y following is valid:

$$|y/R_P| < 0.01,$$

wherein for $\Theta > \Theta_C$ for said deviation y following is valid:

$$y/R_P = |c1 * \Theta^2 - c2 * \Theta + c3|,$$

wherein

$0.000024 < c1 < 0.000064$, and especially $0.000034 < c1 < 0.000054$, and preferably $0.000039 < c1 < 0.000049$,

wherein

$0.00577 < c2 < 0.00977$, and especially $0.00677 < c2 < 0.00877$, and preferably $0.00727 < c2 < 0.00827$,

wherein

$0.053 < c3 < 0.093$, and especially $0.063 < c3 < 0.083$, and preferably $0.068 < c3 < 0.078$,

wherein

$6° < \Theta_C < 15°$, and especially $8° < \Theta_C < 12°$, and preferably $9° < \Theta_C < 11°$.

These proved to be particularly advantageous parameter ranges.

A Coriolis measuring device for measuring a mass flow or a density of a medium flowing through a pipe according to the invention comprises:

a measuring transmitter according to the invention,

an electronic circuit for operating driver and sensors and for providing measuring values for mass flow and/or density of the medium.

In the following, the invention is described on the basis of exemplary embodiments.

Fig. 1 shows a Coriolis measuring device with a Coriolis measuring transmitter that does not form part of the claimed invention;

Figs. 2 a) and 2 b) show side views of exemplary inventive guiding device;

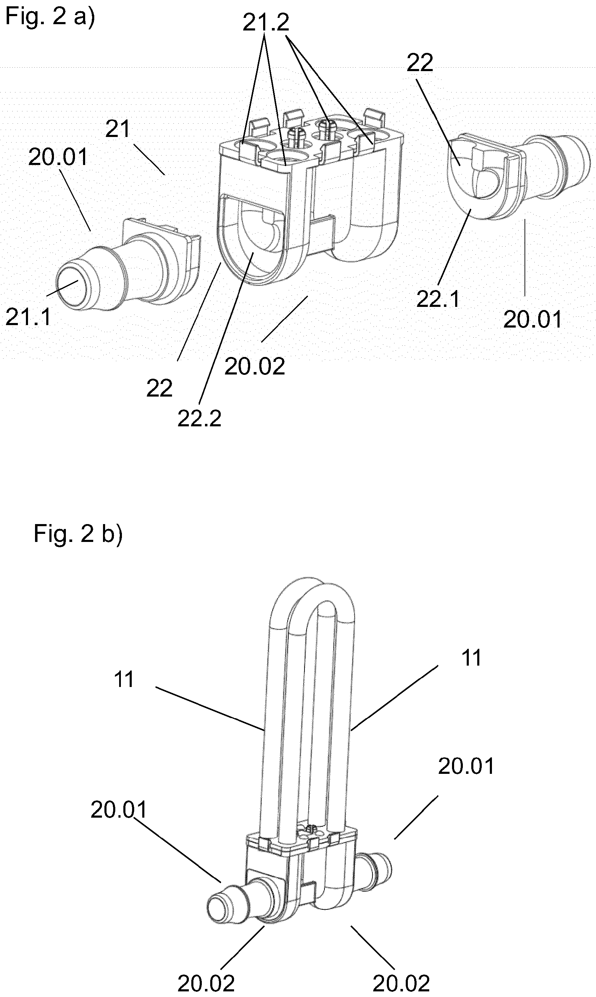

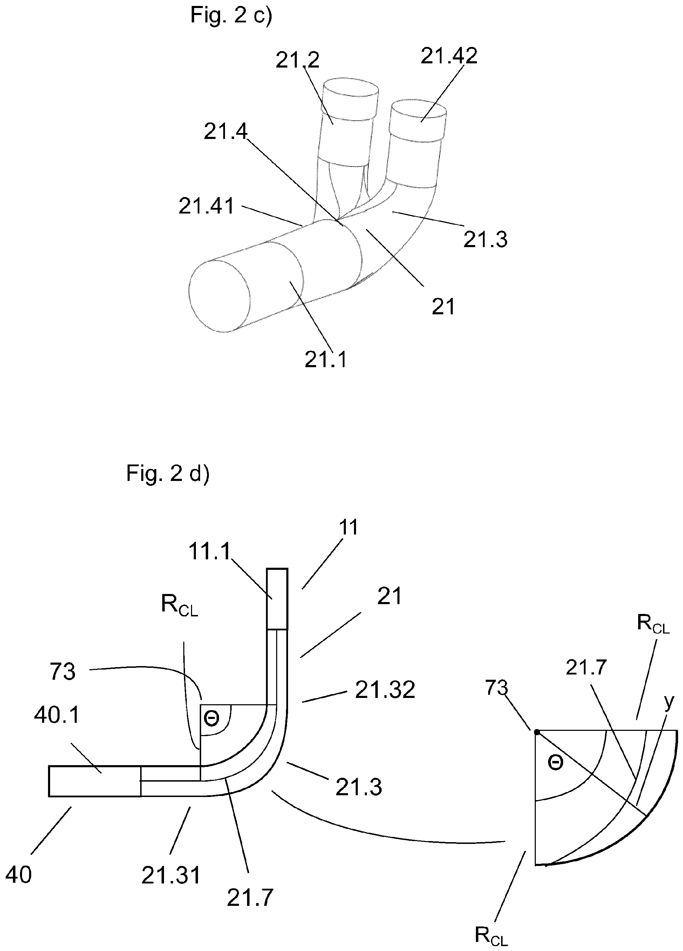

Fig. 2 c) shows an exemplary progress of an inventive fluid chamber;

Fig. 2 d) drafts a schematic projection of said fluid chamber onto a symmetry plane.

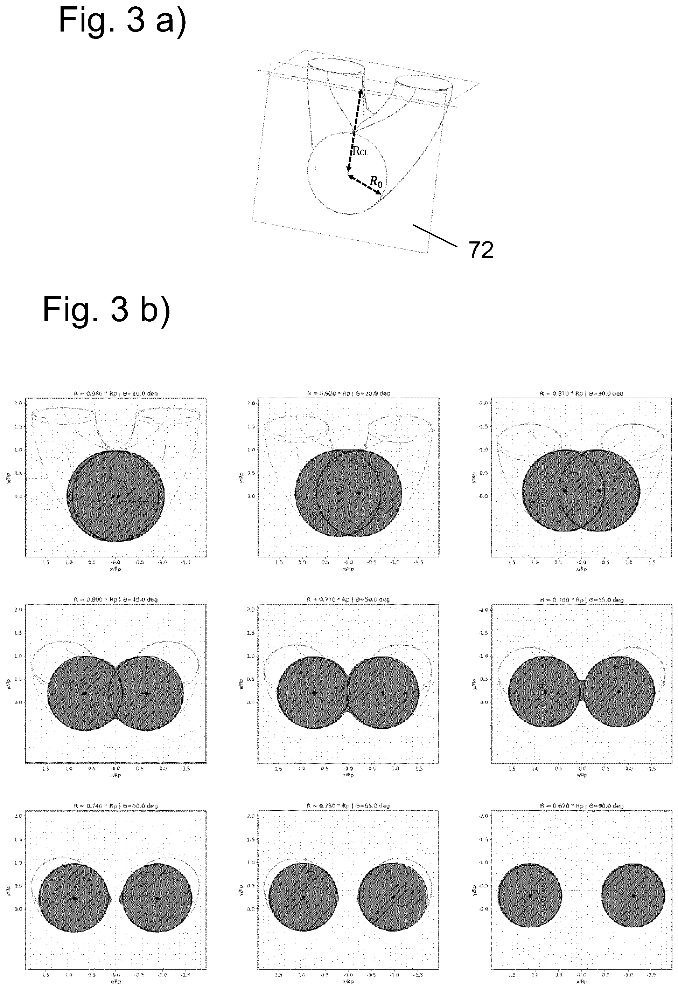

Fig. 3 a) shows a side view of an exemplary inventive fluid chamber.

Fig. 3 b) show cross sections of the exemplary inventive fluid chamber of Fig. 3 a).

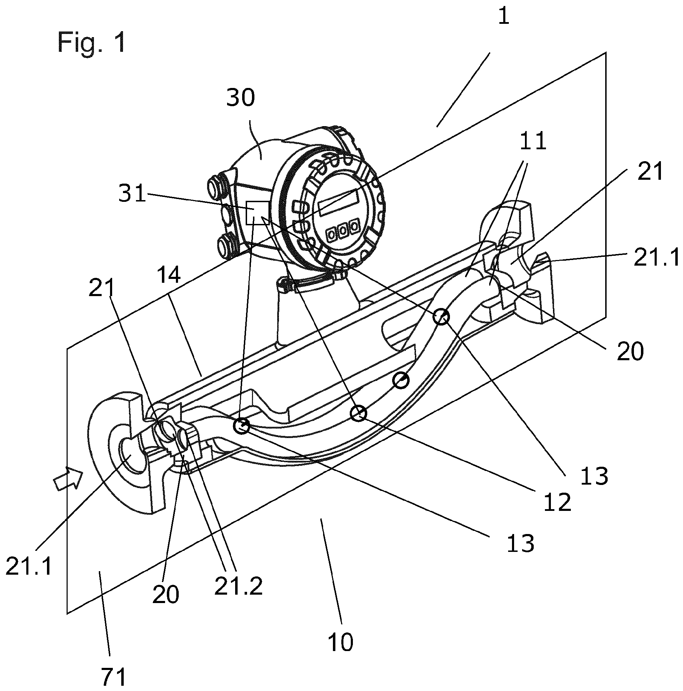

Fig. 1 shows an exemplary Coriolis measuring device 1 with a Coriolis measuring transmitter 10 for measuring a mass flow or a density of a medium flowing through a pipe comprising at least one pair of measuring tubes 11 arranged to oscillate against each other, wherein each measuring tube comprises a centrally arranged bend.

In an equilibrium position the measuring tubes 11 of a pair of measuring tubes are symmetrical with respect to a symmetry plane 70 between both measuring tubes. At least one driver 12 is arranged to oscillate the measuring tubes and at least two sensors 13 are arranged for measuring the oscillations of the measuring tubes. The oscillations cause deflections of the measuring tubes perpendicular to the symmetry plane.

Two guiding devices 20 are arranged for guiding the medium from a pipe to the measuring tubes and vice versa, wherein each guiding device comprises a fluid chamber 21 with a first opening for connection 21.1 with the pipe and with a second opening 21.2 for each measuring tube for connection with the measuring tubes. Here the guiding devices are guiding devices according to the state of the art and designed with a level progress of the flow path. This leads to less compact Coriolis measuring transmitters and seriously limits flow path optimizations.

Fig. 2 a) and b) show side views of an exemplary inventive guiding device in an exploded view graphic, Fig. 2 a) and a joint part graphic including measuring tubes, Fig. 2 b), wherein the guiding device 20 is formed from two parts, wherein a first part 20.01 forms a pipe connecting part and wherein a second 20.02 part forms a measuring tube connecting part. As shown in Fig. 2 a) and b), the second parts 20.02 may be formed from one piece, alternatively they may also be formed from two separate pieces.

In a projection of the fluid chamber onto said symmetry plane 70, the fluid chamber follows a chamber bend 21.3 connecting a measuring tube volume 11.1 with a pipe volume 40.1, see also Fig. 2 d). The guiding device may alternatively also be formed from more than two parts. First part 20.01 and second part 20.02 are connected via an interface 22 comprising a protrusion 22.1 and a corresponding recess 22.2, such that a leak tight connection is arranged. As shown here the protrusion can be part of the first part 20.01 and the recess be part of the second part. However alternatively the protrusion can be part of the second part 20.02 and the recess be part of the first part 20.01.

Fig. 2 c) shows a progress of an exemplary inventive fluid chamber 21 within a guiding device with a first opening for connection 21.1 with the pipe and with a second opening 21.2 for each measuring tube for connection with the measuring tubes, wherein according to the invention the fluid chamber follows a chamber bend 21.3 connecting a measuring tube volume 11.1 with a pipe volume 40.1, see also Fig. 2 d).

Fig. 2 d) shows a projection of a fluid chamber according to the invention onto said symmetry plane 70. A center line 21.7 of said chamber bend 21.3 defined by a projection of the center of areas of cross sections of said fluid chamber onto said symmetry plane confines an angle $\Theta$ and define a length $R_{CL}$ at $\Theta = 0°$ from a center 73 of said angle to the center line. Length $R_{CL}$ defines an arc of a circle 74 confining $\Theta$ with a radius of said length $R_{CL}$. In an embodiment, in cross-section planes 72 projections of the center of area 21.51, 21.61 onto said symmetry plane 71 deviate from said arc of a circle towards the center of said angle 73, therefore the center line 21.7 deviates from said arc of a circle towards a center of the angle $\Theta$ 73 which at the same time is a center of said arc of a circle. The deviation takes a value y dependent on angle $\Theta$.

Said chamber bend has a start of the chamber bend 21.31 with $\Theta = 0°$ facing the pipe, and an end of the chamber bend 21.32 facing a corresponding measuring tube.

In that way, the guiding device may be formed in a compact manner with low flow resistance.

Fig. 3 a) shows a side view onto an inventive fluid chamber illustrating geometric parameters radius R of circles characterizing cross-sections of the fluid chamber in corresponding cross-section planes 72 and a length $R_{CL}$ at $\Theta = 0°$ between the center line and the center of angle $\Theta$.

Fig. 3 b) shows a progress of cross sections of an exemplary inventive fluid chamber with increasing values of $\Theta$, wherein radii of circles decrease monotonic with increasing $\Theta$ and wherein a separation of centers of said circles increase monotonic with increasing $\Theta$.

With $\Theta = 0$ both circles overlap entirely and R = $R_P$.

With increasing $\Theta$ the overlap decreases until at roughly $\Theta = 55°$ the overlap becomes 0. From this point both circles are separated, such that a bifurcation of the cross section takes place.

In an embodiment is $1.8 < R_{CL} / R_P < 2.4$, and especially $1.9 < R_{CL} / R_P < 2.3$, and preferably $2 < R_{CL} / R_P < 2.2$.

In an embodiment is $16.5 \text{ mm} < R_{CL} < 20.5 \text{ mm}$, and especially $17.5 \text{ mm} < R_{CL} < 19.5 \text{ mm}$, and preferably $18 \text{ mm} < R_{CL} < 19 \text{ mm}$,
and/or
$8.5 \text{ mm} < R_P < 9 \text{ mm}$, and especially $8.6 \text{ mm} < R_P < 8.9 \text{ mm}$, and preferably $8.7 \text{ mm} < R_P < 8.8 \text{ mm}$.

In this way a compact setup is achieved still allowing for sufficient medium flow.

In an embodiment said bifurcation takes place at an angle $\Theta_B$ within an interval I of $\Theta$,
wherein $45° < \Theta_B < 75°$, and especially $50° < \Theta_B < 70°$, and preferably $55° < \Theta_B < 65°$.

In this way the first bifurcation part and the second bifurcation part may have a well optimized flow path.

In an embodiment $F_R = - a * \Theta + 1$ with $0.0031 < a < 0.0051$, and especially $0.0036 < a < 0.0046$,

and preferably 0.0039 < a < 0.0043.

This proved to be a particularly advantageous parameter range.

In an embodiment $S(\Theta)/R_P = b * \Theta$ with 0.0109 < |b| < 0.0169, and especially 0.0129 < |b| < 0.0149, and preferably 0.0134 < |b| < 0.0144.

This proved to be a particularly advantageous parameter range.

In an embodiment said length $R_{CL}$ defines an arc of a circle confining $\Theta$ with a radius of said length $R_{CL}$,

wherein within cross-section planes projections of the center of area onto said symmetry plane deviate from said arc of a circle towards the center of said angle,

wherein for $\Theta < \Theta_C$ for a deviation y following is valid:

$$|y/R_P| < 0.01,$$

wherein for $\Theta > \Theta_C$ for said deviation y following is valid:

$$y/R_P = |c1 * \Theta^2 - c2 * \Theta + c3|,$$

wherein

0.000024 < c1 < 0.000064, and especially 0.000034 < c1 < 0.000054, and preferably 0.000039 < c1 < 0.000049,

wherein

0.00577 < c2 < 0.00977, and especially 0.00677 < c2 < 0.00877, and preferably 0.00727 < c2 < 0.00827,

wherein

0.053 < c3 < 0.093, and especially 0.063 < c3 < 0.083, and preferably 0.068 < c3 < 0.078,

wherein

6° < $\Theta_C$ < 15°, and especially 8° < $\Theta_C$ < 12°, and preferably 9° < $\Theta_C$ < 11°.

These proved to be particularly advantageous parameter ranges.

Reference number list

| 1 | Coriolis measuring device |
| 10 | Coriolis measuring transmitter |
| 11 | Measuring tubes |
| 11.1 | Measuring tube volume |
| 12 | Driver |
| 13 | Sensor |
| 14 | Supporting body |
| 20 | Guiding device |
| 20.01 | First part |
| 20.02 | Second part |
| 21 | Fluid chamber |
| 21.1 | First opening |
| 21.2 | Second opening |
| 21.3 | Chamber bend |
| 21.31 | Start of chamber bend |
| 21.32 | End of chamber bend |
| 21.4 | Bifurcation |
| 21.41 | First bifurcation part |
| 21.42 | Second bifurcation part |
| 21.5 | Single coherent area |
| 21.51 | Single center of area |
| 21.6 | Disconnected area |
| 21.61 | Separate center of area |
| 21.7 | Center line |
| 22 | Interface |
| 22.1 | Protrusion |
| 22.2 | Recess |
| 30 | Housing |
| 31 | Electronic circuit |
| 40 | Pipe |
| 40.1 | Pipe volume |
| 71 | Symmetry plane |
| 72 | Cross-section plane |
| 73 | Center of angle $\Theta$ |
| 74 | Arc of circle |
| y | Deviation |

**Claims**

1. Coriolis measuring transmitter (10) of a Coriolis measuring device (1) for measuring a mass flow or a density of a medium flowing through a pipe comprising:

   at least one pair of measuring tubes (11) arranged to oscillate against each other, wherein each measuring tube (11) comprises a centrally arranged bend,
   wherein in an equilibrium position the measuring tubes of a pair of measuring tubes (11) are symmetrical with respect to a symmetry plane (70) between both measuring tubes (11);
   at least one driver (12) to oscillate the measuring tubes (11) and at least two sensors (13) for measuring the oscillations of the measuring tubes (11);
   two guiding devices (20) arranged for guiding the medium from the pipe to the measuring tubes (11) and vice versa,
   wherein each guiding device comprises a fluid chamber (21) with a first opening for connection (21.1) with the pipe and with a second opening

(21.2) for each measuring tube for connection with the measuring tubes (11), wherein the guiding devices (20) are each formed from multiple parts, especially formed from two parts, wherein a first part (20.01) forms a pipe connecting part and wherein at least one second (20.02) part forms a measuring tube connecting part, wherein in a projection of the fluid chamber (21) onto said symmetry plane (70), the fluid chamber (21) follows a chamber bend (21.3) connecting a measuring tube volume (11.1) with a pipe volume (40), wherein the first part (20.01) and the at least one second part (20.02) are connected leak tightly by an interface (22) respectively, wherein the connection of the interface (22) is secured by one of the following methods: screwing, locking, clicking, gluing, welding, bonding, sintering, brazing; **characterized in that**, said interface comprises a protrusion (22.1) and a recess (22.2) at least partially complementary to said fluid chamber following said chamber bend in said projection.

2. Coriolis measuring transmitter (10) according to claim 1,

   wherein said fluid chamber (21) comprises a bifurcation (21.4) with a first bifurcation part (21.41) and a second bifurcation part (21.42), wherein within said first part (21.41) each cross section of the fluid chamber (21) comprises a single coherent area (21.5) with a single center of area (21.51), wherein within said second part (21.42) each cross section of said fluid chamber (21) comprises two disconnected areas (21.6) each corresponding to a measuring tube of said measuring tube pair (11) and each with a separate center of area (21.61), wherein a center line (21.7) is defined by a projection of the center of areas of said cross section onto said symmetry plane (70), wherein a section of said center line, which coincides with the chamber bend (21.31) confines an angle $\Theta$ and define a length $R_{CL}$ at $\Theta = 0°$ from a center (73) of said angle to the center line, wherein a start of the chamber bend (21.31) with $\Theta = 0°$ is facing the pipe, and wherein an end of the chamber bend (21.32) is facing a corresponding measuring tube, wherein a shape of each cross-section is **characterized by** two circles each comprising a center as well as a same radius R, wherein a separation S of the centers of the circles perpendicular to said symmetry plane (70) and the radii R depend on $\Theta$ and follow following formula:

$$R(\Theta) = R_P * F_R(\Theta)$$

with

   - R as a radial length measured from a center of area
   - $R_P$ as a scalar constant representing a pipe radius,
   - $F_R$ as a monotonic non-increasing function with a maximum at $\Theta = 0°$
   and

   $S(\Theta)$ as monotonic non-decreasing function with a minimum at $\Theta = 0°$, wherein cross-section planes (72) defined by said cross-sections comprise the center (73) of said angle.

3. Coriolis measuring transmitter (10) according to claim 2, wherein $1.8 < R_{CL} / R_P < 2.4$, and especially $1.9 < R_{CL} / R_P < 2.3$, and preferably $2 < R_{CL} / R_P < 2.2$.

4. Coriolis measuring transmitter (10) according to claim 2 or 3, wherein

   $16.5 \text{ mm} < R_{CL} < 20.5 \text{ mm}$, and especially $17.5 \text{ mm} < R_{CL} < 19.5 \text{ mm}$, and preferably $18 \text{ mm} < R_{CL} < 19 \text{ mm}$, and/or $8.5 \text{ mm} < R_P < 9 \text{ mm}$, and especially $8.6 \text{ mm} < R_P < 8.9 \text{ mm}$, and preferably $8.7 \text{ mm} < Rp < 8.8 \text{ mm}$.

5. Coriolis measuring transmitter (10) according to claim 2 to 4,

   wherein said bifurcation (21.4) takes place at an angle $\Theta_B$ within an interval I of $\Theta$, wherein $45° < \Theta_B < 75°$, and especially $50° < \Theta_B < 70°$, and preferably $55° < \Theta_B < 65°$.

6. Coriolis measuring transmitter (10) according to one of claims 2 to 5,

   - wherein $F_R = - a * \Theta + 1$ with $0.0031 < a < 0.0051$, and especially $0.0036 < a < 0.0046$, and preferably $0.0039 < a < 0.0043$.

7. Coriolis measuring transmitter (10) according to one of claims 2 to 6,

   - wherein $S(O)/R_P = b * \Theta$ with

0.0109 < |b| < 0.0169, and especially 0.0129 < | b| < 0.0149, and preferably 0.0134 < |b| < 0.0144.

8. Coriolis measuring transmitter (10) according to one of claims 2 to 7,

wherein said length $R_{CL}$ defines an arc of a circle (74) confining Θ with a radius of said length $R_{CL}$, wherein within cross-section planes (72) projections of the center of area (21.51, 21.61) onto said symmetry plane (70) deviate from said arc of a circle towards the center of said angle (73), wherein for Θ < $Θ_C$ for a deviation y following is valid:

$$|y/R_P| < 0.01,$$

wherein for Θ > $Θ_C$ for said deviation y following is valid:

$$y/R_P = |c1 * Θ^2 − c2 * Θ + c3|,$$

wherein
0.000024 < c1 < 0.000064, and especially 0.000034 < c1 < 0.000054, and preferably 0.000039 < c1 < 0.000049,
wherein
0.00577 < c2 < 0.00977, and especially 0.00677 < c2 < 0.00877, and preferably 0.00727 < c2 < 0.00827,
wherein
0.053 < c3 < 0.093, and especially 0.063 < c3 < 0.083, and preferably 0.068 < c3 < 0.078,
wherein
6° < $Θ_C$ < 15°, and especially 8° < $Θ_C$ < 12°, and preferably 9° < $Θ_C$ < 11°.

9. Coriolis measuring device (1) for measuring a mass flow or a density of a medium flowing through a pipe comprising:

a measuring transmitter (10) according to one of former claims,
an electronic circuit (31) for operating driver (12) and sensors (13) and for providing measuring values for mass flow and/or density of the medium.

**Patentansprüche**

1. Coriolis-Messumformer (10) einer Coriolis-Messvorrichtung (1) zur Messung eines Massedurchflusses oder einer Dichte eines Mediums, das durch eine Leitung fließt, Folgendes umfassend:

mindestens ein Paar an Messrohren (11), die so angeordnet sind, dass sie gegeneinander schwingen, wobei jedes Messrohr (11) eine mittig angeordnete Biegung umfasst,
wobei die Messrohre eines Paares an Messrohren (11) in einer Gleichgewichtsposition symmetrisch in Bezug auf eine Symmetrieebne (70) zwischen den beiden Messrohren (11) sind;
mindestens einen Erreger (12) zum Schwingen der Messrohre (11) und mindestens zwei Sensoren (13) zur Messung der Schwingungen der Messrohre (11);
zwei Führungsvorrichtungen (20), die zum Führen des Mediums von der Leitung zu den Messrohren (11) und umgekehrt angeordnet sind,
wobei jede Führungsvorrichtung eine Mediumskammer (21) mit einer ersten Öffnung zur Verbindung (21.1) mit der Leitung und einer zweiten Öffnung (21.2) für jedes Messrohr zur Verbindung mit den Messrohren (11) umfasst,
wobei die Führungsvorrichtungen (20) jeweils aus mehreren Teilen gebildet sind, insbesondere aus zwei Teilen,
wobei ein erster Teil (20.01) einen Leitungsverbindungsteil bildet und
wobei mindestens ein zweiter (20.02) Teil einen Messrohr-Verbindungsteil bildet,
wobei in einer Projektion der Mediumskammer (21) auf besagte Symmetrieebene (70) die Mediumskammer (21) einer Kammerbiegung (21.3) folgt, die ein Messrohrvolumen (11.1) mit einem Leitungsvolumen (40) verbindet,
wobei der erste Teil (20.01) und der mindestens zweite Teil (20.02) jeweils lecksicher durch eine Schnittstelle (22) verbunden sind,
wobei die Verbindung der Schnittstelle (22) durch eine der folgenden Verfahren gesichert ist: Schrauben, Verriegeln, Einrasten, Kleben, Schweißen, Binden, Sintern, Löten;
**dadurch gekennzeichnet, dass**
besagte Schnittstelle eine Auskragung (22.1) und eine Vertiefung (22.2) umfasst, die mindestens teilweise komplementär zu besagter Mediumskammer sind, die besagter Kammerbiegung in besagter Projektion folgt.

2. Coriolis-Messumformer (10) nach Anspruch 1,

wobei besagte Mediumskammer (21) eine Verzweigung (21.4) mit einem ersten Verzweigungsteil (21.41) und einem zweiten Verzweigungsteil (21.42) umfasst,
wobei innerhalb des besagten ersten Teils (21.41) jeder Querschnitt der Mediumskammer (21) einen einzigen zusammenhängenden Bereich (21.5) mit einem einzigen Bereichsmittelpunkt (21.51) umfasst,
wobei innerhalb besagten zweiten Teils (21.42) jeder Querschnitt besagter Mediumskammer (21) zwei unzusammenhängende Bereiche (21.6) umfasst, wobei jeder einem Messrohr des besagten Paars an Messrohren (11) entspricht und jedes einen separaten Bereichsmittelpunkt (21.61) aufweist,

wobei eine Mittellinie (21.7) durch eine Projektion des Bereichsmittelpunkt des besagten Querschnitts auf besagte Symmetrieachse (70) definiert ist,

wobei ein Abschnitt der besagten Mitteillinie, der mit der Kammerbiegung (21.31) zusammenfällt, einen Winkel $\Theta$ begrenzt und eine Länge $R_{CL}$ bei $\Theta = 0°$ von einem Mittelpunkt (73) des besagten Winkels zur Mittellinie aufweist,

wobei ein Beginn der Kammerbiegung (21.31) mit $\Theta = 0°$ der Leitung zugewandt ist, und wobei ein Ende der Kammerbiegung (21.32) einem entsprechenden Messrohr zugewandt ist,

wobei eine Form jedes Querschnitts durch zwei Kreise gekennzeichnet ist, von denen jeder einen Mittelpunkt sowie einen selben Radius umfasst, wobei eine Trennung S der Mittelpunkte der Kreise senkrecht zu besagter Symmetrieebene (70) ist und die Radien R von $\Theta$ abhängen und der folgenden Formel entsprechen:

$$R(\Theta) = R_P * F_R(\Theta)$$

wobei

- R eine radiale Länge gemessen von einem Bereichsmittelpunkt,
- Rp eine skalare Konstante, die einen Leitungsradius darstellt,
- $F_R$ eine monotone nicht-steigende Funktion mit einem Maximum bei $\Theta = 0^0$ und

$S(\Theta)$ eine monotone nicht-steigende Funktion mit einem Minimum bei $\Theta = 0^0$ ist,
wobei Querschnittsebenen (72), die durch besagte Querschnitte definiert sind, den Mittelpunkt (73) des besagten Winkels umfassen.

3. Coriolis-Messumformer (10) nach Anspruch 2, wobei
$1,8 < R_{CL}/R_P < 2,4$, und insbesondere $1,9 < R_{CL}/R_P < 2,3$, und bevorzugt $2 < R_{CL}/R_P < 2,2$.

4. Coriolis-Messumformer (10) nach Anspruch 2 oder 3, wobei

16,5 mm $< R_{CL} <$ 20,5 mm, und insbesondere 17,5 mm $< R_{CL} <$ 19,5 mm, und bevorzugt 18 mm $< R_{CL} <$ 19 mm, und/oder
8,5 mm $< R_P <$ 9 mm, und insbesondere 8,6 mm $< R_P <$ 8,9 mm, und bevorzugt 8,7 mm $< R_P <$ 8,8 mm.

5. Coriolis-Messumformer (10) nach Anspruch 2 bis 4,

wobei besagte Verzweigung (21.4) bei einem Winkel $\Theta_B$ mit einem Abstand I von $\Theta$ erfolgt, wobei $45^0 < \Theta_B < 75^0$, und insbesondere $50^0 < \Theta_B < 70^0$ und bevorzugt $55^0 < \Theta_B < 65^0$ ist.

6. Coriolis-Messumformer (10) nach einem der Ansprüche 2 bis 5,

- wobei $F_R = -a * \Theta + 1$ mit
$0,0031 < a < 0,0051$, und insbesondere $0,0036 < a < 0,0046$, und bevorzugt $0,0039 < a < 0,0043$.

7. Coriolis-Messumformer (10) nach einem der Ansprüche 2 bis 6,

- wobei $S(\Theta)/R_P = b * \Theta$ mit
$0,0109 < |b| < 0,0169$, and insbesondere $0,0129 < |b| < 0,0149$, und bevorzugt $0,0134 < |b| < 0,0144$.

8. Coriolis-Messumformer (10) nach einem der Ansprüche 2 bis 7,
wobei besagte Länge $R_{CL}$ einen Bogen eines Kreises (74) definiert, der $\Theta$ begrenzt mit einem Radius besagter Länge $R_{CL}$,

wobei innerhalb von Querschnittsebenen (72) Projektionen des Bereichsmittelpunkts (21.51, 21.61) auf besagte Symmetrieebene (70) von besagtem Bogen eines Kreises zum Mittelpunkt des besagten Winkels (73) abweichen,
wobei für $\Theta < \Theta c$ für eine Abweichung y Folgendes gilt:

$$|y/Rp| < 0,01,$$

Wobei für $\Theta > \Theta c$ für besagte Abweichung y Folgendes gilt:

$$y/Rp = |c1 * \Theta^2 - c2 * \Theta + c3|,$$

wobei

$0,000024 < cl < 0,000064$, und insbesondere $0,000034 < cl < 0,000054$, und bevorzugt $0,000039 < cl < 0,000049$,
wobei
$0,00577 < c2 < 0,00977$, und insbesondere $0,00677 < c2 < 0,00877$, und bevorzugt $0,00727 < c2 < 0,00827$,
wobei

$0{,}053 < c3 < 0{,}093$, und insbesondere $0{,}063 < c3 < 0{,}083$, und bevorzugt $0{,}068 < c3 < 0{,}078$,
wobei

$6^0 < \Theta c < 15^0$, und insbesondere $8^0 < \Theta c < 12^0$, und bevorzugt $9° < \Theta c < 11^0$.

9.  Coriolis-Messvorrichtung (1) zur Messung eines Massedurchflusses oder einer Dichte eines Mediums, das durch eine Leitung fließt, Folgendes umfassend:

> einen Messumformer (10) nach einem der vorhergehenden Ansprüche,
> einen elektronischem Kreis (31) zum Betrieb von Erreger (12) und Sensoren (13) und zum Bereitstellen von Messwerten für Massedurchfluss und Dichte des Mediums

**Revendications**

1.  Transmetteur Coriolis (10) d'un appareil de mesure Coriolis (1) destiné à la mesure d'un débit massique ou d'une densité d'un produit s'écoulant à travers une conduite, lequel transmetteur comprend :

> au moins une paire de tubes de mesure (11) agencés pour vibrer l'un contre l'autre, chaque tube de mesure (11) comprenant un coude central,
> les tubes de mesure d'une paire de tubes de mesure (11), dans une position d'équilibre, étant symétriques par rapport à un plan de symétrie (70) entre les deux tubes de mesure (11) ;
> au moins un excitateur (12) destiné à faire vibrer les tubes de mesure (11) et au moins deux capteurs (13) destinés à mesurer les vibrations des tubes de mesure (11) ;
> deux dispositifs de guidage (20) conçus pour guider le produit de la conduite vers les tubes de mesure (11) et vice versa,
> chaque dispositif de guidage comprenant une chambre de produit (21) avec une première ouverture (21.1) pour le raccordement avec la conduite et avec une deuxième ouverture (21.2) pour chaque tube de mesure pour le raccordement avec les tubes de mesure (11),
> les dispositifs de guidage (20) étant chacun formés de plusieurs parties, notamment formés de deux parties,
> une première partie (20.01) formant une partie de raccordement à la conduite et
> au moins une deuxième partie (20.02) formant une partie de raccordement au tube de mesure,
> la chambre de produit (21), dans une projection de la chambre de produit (21) sur le plan de symétrie (70), suivant un coude de chambre (21.3) reliant un volume de tube de mesure (11.1) à un volume de conduite (40),
la première partie (20.01) et au moins une deuxième partie (20.02) étant reliées de manière étanche par une interface (22) respectivement,
le raccordement de l'interface (22) étant assuré par l'une des méthodes suivantes :

> vissage, verrouillage, encliquetage, collage, soudage, frittage, brasage ;
> **caractérisé en ce que**
> ladite interface comprend une saillie (22.1) et un renfoncement (22.2) au moins partiellement complémentaire de la chambre de produit suivant le coude de chambre dans la projection.

2.  Transmetteur Coriolis (10) selon la revendication 1,

> pour lequel la chambre de produit (21) comprend une bifurcation (21.4) avec une première partie de bifurcation (21.41) et une deuxième partie de bifurcation (21.42),
> pour lequel, à l'intérieur de la première partie (21.41), chaque section transversale de la chambre de produit (21) comprend une seule zone cohérente (21.5) avec un seul centre de zone (21.51),
> pour lequel, dans la deuxième partie (21.42), chaque section transversale de la chambre de produit (21) comprend deux zones déconnectées (21.6) correspondant chacune à un tube de mesure de la paire de tubes de mesure (11) et chacune avec un centre de zone séparé (21.61),
> pour lequel une ligne centrale (21.7) est définie par une projection du centre des zones de la section transversale sur le plan de symétrie (70),
> pour lequel une section de cette ligne centrale, qui coïncide avec le coude de chambre (21.31), délimite un angle $\Theta$ et définit une longueur $R_{CL}$ à $\Theta = 0°$ à partir d'un centre (73) de cet angle jusqu'à la ligne centrale,
> pour lequel le début du coude de chambre (21.31) avec $\Theta = 0°$ est orienté vers la conduite, et
> pour lequel une extrémité de coude de chambre (21.32) est orientée vers un tube de mesure correspondant,
> pour lequel une forme de chaque section transversale est **caractérisée par** deux cercles comprenant chacun un centre ainsi qu'un même rayon R, une séparation S des centres des cercles perpendiculaires au plan de symétrie (70) et les rayons R dépendant de $\Theta$ et suivant la formule suivante :

$$R(\Theta) = R_P * F_R(\Theta)$$

- R étant une longueur radiale mesurée à partir d'un centre de surface
- $R_P$ étant une constante scalaire représentant un rayon de conduite,
- $F_R$ étant une fonction monotone non croissante avec un maximum à $\Theta = 0°$
et

S($\Theta$) étant une fonction monotone non décroissante avec un minimum à $\Theta = 0°$,
les plans de section (72) définis par les sections transversales comprenant le centre (73) de l'angle.

3. Transmetteur Coriolis (10) selon la revendication 2, pour lequel
$1,8 < R_{CL} / R_P < 2,4$, et notamment $1,9 < R_{CL} / R_P < 2,3$, et de préférence $2 < R_{CL} / R_P < 2,2$.

4. Transmetteur Coriolis (10) selon la revendication 2 ou 3,
pour lequel

$16,5$ mm $< R_{CL} < 20,5$ mm, et notamment $17,5$ mm $< R_{CL} < 19,5$ mm, et de préférence $18$ mm $< R_{CL} < 19$ mm,
et/ou
$8,5$ mm $< R_P < 9$ mm, et notamment $8,6$ mm $< R_P < 8,9$ mm, et de préférence $8,7$ mm $< R_P < 8,8$ mm.

5. Transmetteur Coriolis (10) selon les revendications 2 à 4,

pour lequel la bifurcation (21.4) se produit à un angle compris dans un intervalle I de $\Theta$,
avec $45° < \Theta_B < 75°$, et notamment $50° < \Theta_B < 70°$ et de préférence $55° < \Theta_B < 65°$.

6. Transmetteur Coriolis (10) selon l'une des revendications 2 à 5,

- pour lequel $F_R = - a * \Theta + 1$ avec $0,0031 < a < 0,0051$, et notamment $0,0036 < a < 0,0046$, et de préférence $0,0039 < a < 0,0043$.

7. Transmetteur Coriolis (10) selon l'une des revendications 2 à 6,

- pour lequel $S(\Theta)/R_P = b * \Theta$ avec $0,0109 < |b| < 0,0169$, et notamment $0,0129 < |b| < 0,0149$, et de préférence $0,0134 < |b| < 0,0144$.

8. Transmetteur Coriolis (10) selon l'une des revendications 2 à 7,

pour lequel la longueur $R_{CL}$ définit un arc de cercle (74) confinant $\Theta$ avec un rayon de ladite longueur $R_{CL}$,
pour lequel, dans les plans de section transversale (72), les projections du centre de la zone (21.51 , 21.61) sur le plan de symétrie (70) dévient de l'arc de cercle vers le centre de l'angle (73),
pour lequel, pour $\Theta < \Theta_C$, ce qui suit est valable pour une déviation y :

$$|y/R_p| < 0,01,$$

pour lequel, pour $\Theta > \Theta_C$, ce qui suit est valable pour une déviation y :

$$y/R_p = |c1 * \Theta^2 - c2 * \Theta + c3|,$$

avec
$0,000024 < c1 < 0,000064$, et notamment $0,000034 < c1 < 0,000054$, et de préférence $0,000039 < c1 < 0,000049$,
avec
$0,00577 < c2 < 0,00977$, et notamment $0,00677 < c2 < 0,00877$, et de préférence $0,00727 < c2 < 0,00827$,
avec
$0,053 < c3 < 0,093$, et notamment $0,063 < c3 < 0,083$, et de préférence $0,068 < c3 < 0,078$,
avec
$6° < \Theta_C < 15°$, et notamment $8° < \Theta_C < 12°$, et de préférence $9° < \Theta_C < 11°$.

9. Appareil de mesure Coriolis (1) destiné à la mesure d'un débit massique ou d'une densité d'un produit s'écoulant dans une conduite, lequel appareil comprend :

un transmetteur de mesure (10) selon l'une des revendications précédentes,
un circuit électronique (31) destiné à faire fonctionner l'excitateur (12) et les capteurs (13), ainsi qu'à fournir des valeurs mesurées pour le débit massique et/ou la densité du produit.

Fig. 1

Fig. 2 a)

Fig. 2 b)

Fig. 2 c)

Fig. 2 d)

# Fig. 3 a)

72

# Fig. 3 b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019120339 A1
- EP 2048480 A2
- EP 0601256 A1
- DE 69938581 T2